# EUROPEAN PATENT SPECIFICATION

(11) **EP 0 495 564 B1**
(45) Date of publication and mention of the grant of the patent: **12.10.1994**
(21) Application number: 92300039.2
(22) Date of filing: 03.01.1992
(51) Int. Cl.: B60J 7/08, B60J 7/11

(54) **Latch for hinged panel**
Klinke für um ein Gelenk drehbares Brett
Loquet pour panneau articulé

(30) Priority: 12.01.1991 GB 9100710
(43) Date of publication of application: 22.07.1992
(73) Proprietor: Britax Weathershields Limited, Birmingham B5 7EH (GB)
(72) Inventor: Betteridge, Timothy David, Erdington, Birmingham B24 0DJ (GB); Lawler, Adrian Keith, Solihull, West Midlands B91 2LN (GB)
(74) Representative: Hollinghurst, Antony

(56) References cited:
- DE-A- 3 331 187
- DE-U- 8 204 203
- GB-A- 2 215 393
- GB-A- 2 217 385
- US-A- 3 974 753
- US-A- 4 466 644

## Description

This invention relates to a latch for a hinged panel mounted in a frame, the latch comprising a toggle link having a first element connected to the panel by first pivot pin, and a second element connected to the frame by a second pivot pin and connected to the first element by a third pivot pin, so as to be movable between a closed position in which the two elements are aligned in overlapping relationship with one another and a fully open position in which the two elements are held together in substantially end-to-end relationship with each other. Latches of this type are particularly suitable for use with opening roofs for vehicles, as described in US-A-3974753 and DE-U-8 204 203 (corresponding to the preamble of claim 1).

The present invention is concerned with a latch for a hinged panel of the foregoing type, having a stable intermediate position between its closed position and its fully open position.

According to the invention, one of the elements of the toggle link includes a cam formation having at least three radially inwardly extending recesses arranged around the third pivot pin, and the other element of the toggle link carries a spring-loaded cam follower arranged to be selectively engageable in each of said at least three recesses to retain the panel in a closed position, a fully open position and an intermediate position between the closed position and the fully open position.

In one form of the invention, the element of the toggle link carrying the cam follower comprises a first link part carrying the cam follower, a second link part connected for linear movement relative to the first link part, and spring means biassing the two link parts relative to one another so as to urge the cam follower towards the third pivot pin.

An embodiment of the invention will now be described, by way of example, with reference to the accompanying drawings, in which:
Figure 1 is a perspective view of the top of a motor car fitted with an opening roof of the type referred to above;
Figure 2 is an exploded perspective view of a latch in accordance with the invention, suitable for use with the opening roof illustrated in Figure 1;
Figure 3 is a cross-sectional view, taken on the line 3 - 3 in Figure 2 but with the latch assembled and fitted to the opening roof shown in Figure 1, and in its fully open position;
Figure 4 is a cross-sectional view, also taken on the line 3 - 3, of one part of one of the elements of the toggle link;
Figure 5 is a cross-sectional view, also taken on the line 3 - 3 of the other part of said one element of the toggle link;
Figure 6 is a cross-sectional view, similar to Figure 3 but showing the latch in an intermediate position; and
Figure 7 is a cross-sectional view, similar to Figures 3 and 4 but showing the latch in its closed position.

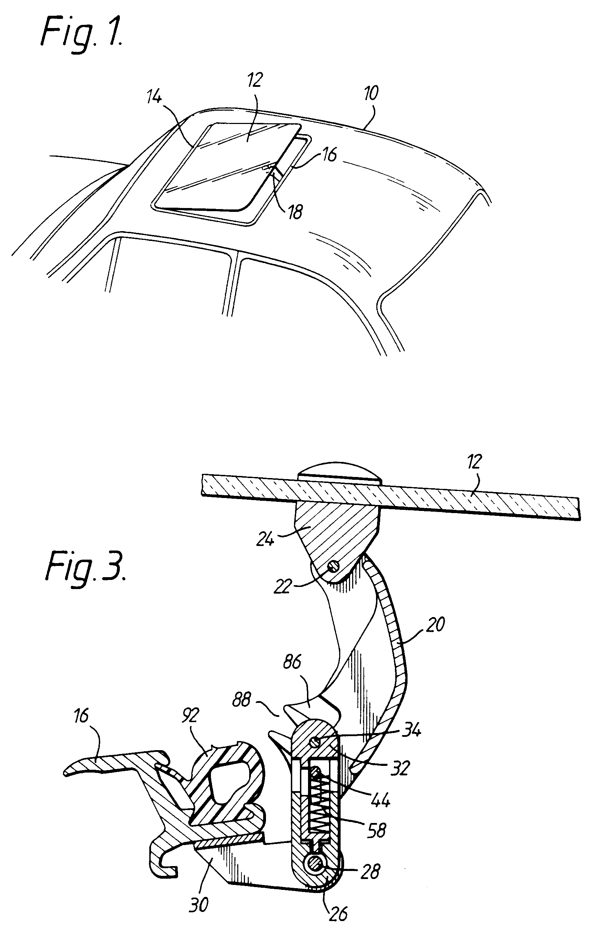

Referring to Figure 1, a motor car has an open roof comprising a panel 12 hinged along its leading edge 14 to a frame 16 bounding an opening in the roof of the vehicle 10. The hinges (not shown) are constructed so as to permit the panel 12 to be unhooked after it has been opened well beyond its normal fully open position as shown in Figure 1. A latch 18 at the rear of the panel 12 is arranged to hold the panel 12 either in the normal open position as illustrated, in a fully closed position in which the panel 12 is level with the roof of the vehicle 10 and in an intermediate position between the fully open position and the closed position. One part of the latch is arranged to be detachable from another part to permit the panel 12 to be opened well beyond its normal fully open position allow complete removal of the panel 12, as will be explained hereinafter.

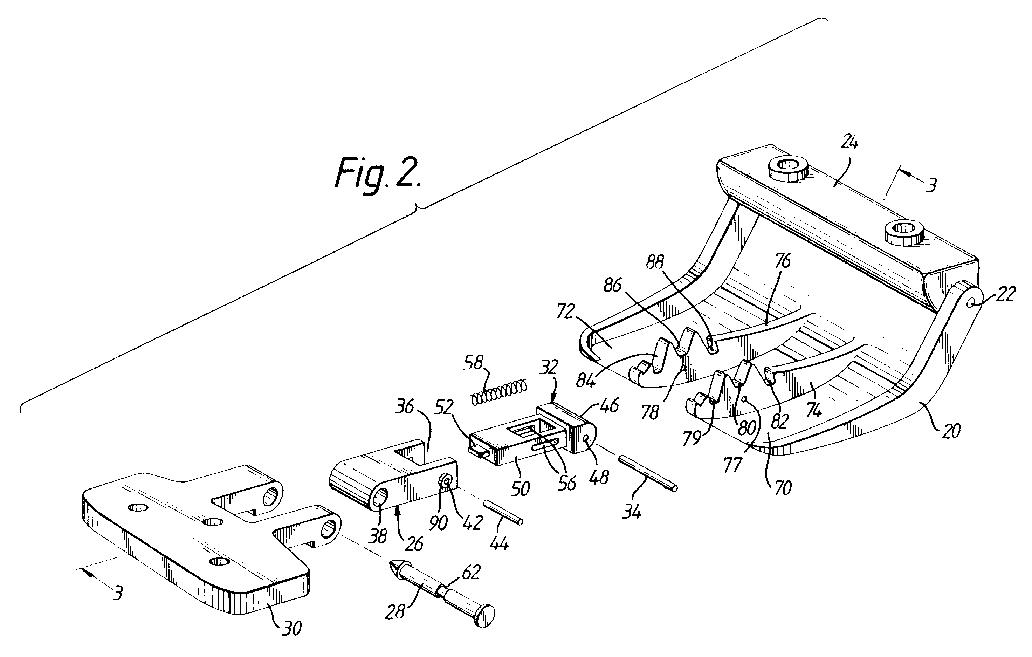

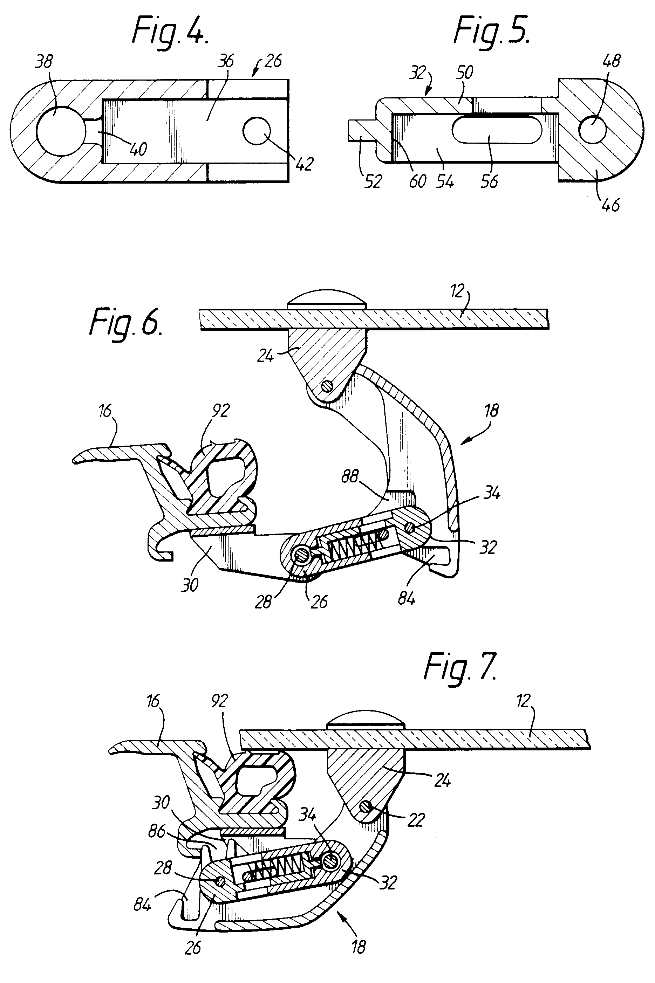

Referring to Figures 2 and 3, the latch comprises a handle 20, which serves as a first toggle link and is connected by a first pivot pin 22 to a mounting bracket 24 which is secured to the panel 12 near its rear edge. The latch also comprises a second toggle link, consisting of a first link part 26 which is pivotally connected by a second pivot pin 28 to a bracket 30 secured to the frame 16, and a second link part 32 which is connected by a third pivot pin 34 to the handle 20.

The two link parts 26 and 32 are illustrated on a larger scale in Figures 4 and 5 respectively. The first link part 26 has a recess 36, of rectangular cross-section extending inwardly from the end opposite to the bore 38 for receiving the second pivot pin 28. At its inner end, the recess 36 has a small opening 40 communicating with the bore 38. A second bore 42 extends across the open end of the recess 36, parallel to the bore 38, and serves to receive a further pin 44 (Figure 2).

Figure 5 shows the second link part 32 which has a head 46 containing a bore 48 for receiving the third pivot pin 34, and a stem 50 of cross-section to be a sliding fit in the recess 36 in the first link part 26. On its opposite end to the head 46, the stem 50 carries a tongue 52 dimensioned to fit through the opening 40 into the bore 38. The stem 32 contains a recess 54 which has an open bottom (as viewed in Figures 2 and 5) and has two slots 56 in its side walls. When assembled, as shown in Figure 3, the pin 44 projects through the bores 42 in the first link part 26 and the slots 56 in the second link part 32 so as to permit limited sliding movement between the two link parts. A compression spring 58 engages between the pin 44 and the end wall 60 of the recess 56 adjacent to the tongue 52 so as to bias the second link part 32 towards the bore 38 in the first link part 26 so that the second link is normally in a condition of minimum length, with the tongue 52 projecting into the bore 38. As can be seen from Figure 2, the second pivot pin 28 which is received in the bore 38 has a central groove 62. The tongue 52 engages in this groove and prevents withdrawal of the pin 28 unless the second link part 32 is displaced to the right, as viewed in Figures 2 and 3 against the action of the spring 58.

Reverting to Figure 2, the handle 20 includes two finger grip portions 70 and 72, between which are located two upstanding flanges 74 and 76, each of which contains a respective hole 77, 78 for receiving the third pivot pin 34. The outer edges of the flange 74 contains three recesses 79, 80 and 82, spaced around the hole 77. The flange 76 has three similar recesses 84, 86 and 88 spaced round the hole 78.

A boss 90 surrounding the bore 42 on the first link part 26 of the second toggle link engages with the cam surface on the edge of the flange 74 and a similar boss (not shown) on the other side of the first link part 26 engages with the cam surface on the other flange 76. When the boss 90 is in one of the recesses 79, 80 and 82, and the other boss is in one of the recesses 84, 86 and 88, the second toggle link can take up its condition of minimum length with the pin 44 at the left-hand of the slots 56 (as viewed in Figures 2 and 5). When the boss 42 is at an intermediate position between these recesses, the first link part 26 is displaced away from the third pivot pin 34, compressing the spring 58.

Figure 3 illustrates the latch in the position it occupies when the panel 12 is tilted to its fully opened position, as illustrated in Figure 1. The boss 90 engages in the recess 79 in the flange 74 and the corresponding boss (not shown) engages in the recess 84. If the finger grip portions 70 and 72 on the handle 20 are pushed to the right, as viewed in Figure 3, the boss 90 rides over the cam surface on the flange 74, compressing the spring 58 until it engages in the next recess 80 and the other boss (not shown) engages in the recess 86. The latch 18 is now in the position illustrated in Figure 6 with the panel 12 in an intermediate open position.

Further movement of the handle 20 in the same direction causes the boss 90 to move into the third recess 82 in the flange 74, and the other boss (not shown) to move into the third recess 88 in the flange 76. The handle 18 is now in the position shown in Figure 7 and the panel 12 is in its closed position, in which its bottom surface engages with a seal 92 which is secured to the frame 16. The panel 12 can be moved from its closed positions to one of its open positions by pulling down on the finger grips 70 and 72 on the handle 20.

If it is desired to remove the panel 12 completely from the vehicle, it is necessary to remove the second pivot pin 28. In order to do this, the latch 18 is set in its fully open position illustrated in Figure 3 and the user then pushes upwardly on the panel 12 so as to compress the spring 58 and disengage the tongue 52 from the groove 62 in the pin 28, which can then be withdrawn. Alternatively, the tongue 52 may be held clear of the groove 62 by holding the latch 18 at an intermediate position between either the positions illustrated in Figures 3 and 6, or the positions illustrated in Figures 6 and 7 so that the boss 90 engages with the cam surface on the flange 74 at a position between the recesses 79, 80 and 82.

## Claims

1. A latch for a hinged panel (12) mounted in a frame (16), the latch comprising a toggle link having a first element (20) connected to the panel (12) by first pivot pin (22), and a second element (26, 32) connected to the frame by a second pivot pin (28) and connected to the first element (20) by a third pivot pin (34), so as to be movable between a closed position in which the two elements (20, 26, 32) are aligned in overlapping relationship with one another and a fully open position in which the two elements (20, 26, 32) are held together in substantially end-to-end relationship with each other, characterised in that one of the elements (20) of the toggle link includes a cam formation (74, 76) having at least three radially inwardly extending recesses (79, 80, 82) arranged around the third pivot pin (34), and the other element (32) of the toggle link carries a spring-loaded cam follower (90) arranged to be selectively engageable in each of said at least three recesses (79, 80, 82) to retain the panel (12) in a closed position, a fully open position and an intermediate position between the closed position and the fully open position.

2. A latch according to claim 1, wherein the element (26,32) of the toggle link carrying the cam follower comprises a first link part (26) carrying the cam follower (90), a second link part (32) connected for linear movement relative to the first link part (26), and spring means (58) biassing the two link parts (26, 32) relative to one another so as to urge the cam follower (90) towards the third pivot pin (34).

3. A latch according to claim 2, wherein said second link part (32) carries a detent formation (52) positioned so as to be biased by said spring means into engagement with a complementary formation (62) on the pivot pin (28) to which said first link part (26) is connected, thereby to restrict axial movement of said pivot pin (28) out of engagement with said first link part (26).

4. A latch according to claim 1, 2 or 3, wherein the first element (20) includes a finger grip (70, 72).

## Patentansprüche

1. Eine Klinke für eine um ein Gelenk drehbare Platte (12), die in einem Rahmen (16) eingebaut ist, wobei die Klinke eine Gelenkstangenverbindung aufweist, die ein erstes Element (20), das mit der Platte (12) durch einen ersten Drehzapfen (22) verbunden ist, sowie ein zweites Element (26, 32) aufweist, welches mit dem Rahmen durch einen zweiten Drehzapfen (28) verbunden ist und mit dem ersten Element (20) durch einen dritten Drehzapfen (34) verbunden ist, um zwischen einer geschlossenen Position, in welcher die zwei Elemente (20, 26, 32) in einer einander überlappenden Beziehung ausgerichtet sind, und einer voll geöffneten Position beweglich zu sein, in welcher die zwei Elemente (20, 26, 32) gemeinsam in einer im wesentlichen End-zu-End-Beziehung zueinander gehalten werden,
**dadurch gekennzeichnet,**
daß das eine der Elemente (20) der Gelenkstangenverbindung ein nockenförmiges Gebilde (74, 76) umfaßt, welches wenigstens drei sich radial einwärts erstreckende Ausnehmungen (79, 80, 82) aufweist, die um den dritten Drehzapfen (34) herum angeordnet sind, und daß das andere Element (32) der Gelenkstangenverbindung einen federbelasteten Nockenstößel (90) trägt, der zum selektiven Ineingriffgelangen mit einer jeden der genannten wenigstens drei Ausnehmungen (79, 80, 82) angeordnet ist, um die Platte (12) in einer geschlossenen Stellung, einer vollständig geöffneten Stellung und in einer Zwischenstellung zwischen der geschlossenen Stellung und der voll geöffneten Stellung zu halten.

2. Eine Klinke gemäß Anspruch 1, bei welcher das den Nockenstößel tragende Element (26, 32) der Gelenkstangenverbindung aufweist: einen ersten Gelenkteil (26), welcher den Nockenstößel (90) trägt, einen zweiten Gelenkteil (32), welcher zum Zwecke einer linearen Bewegung relativ zu dem ersten Gelenkteil (26) verbunden ist, sowie Federmittel (58), welche die zwei Gelenkteile (26, 32) relativ zueinander vorspannen, so daß der Nockenstößel (90) gegen den dritten Drehzapfen (34) hin gedrängt wird.

3. Eine Klinke gemäß Anspruch 2, bei welcher der genannte zweite Gelenkteil (32) eine Sperrvorrichtung (52) trägt, welche so angeordnet ist, daß sie durch die genannten Federmittel in ein Ineingriffgelangen mit einer komplementären Ausformung (62) an dem Drehzapfen (28) vorgespannt wird, mit welchem der genannte erste Gelenkteil (26) verbunden ist, um dadurch die axiale Bewegung des genannten Drehzapfens (28) aus dem Ineingriffstehen mit dem genannten ersten Gelenkteil (26) heraus zu begrenzen.

4. Eine Klinke gemäß Anspruch 1, 2 oder 3, bei welcher das erste Element (20) einen Fingergriff (70, 72) aufweist.

## Revendications

1. Loquet pour un panneau articulé (12) monté dans un cadre (16), le loquet comprenant une liaison à genouillère comportant un premier élément (20) relié au panneau (12) par une première tige de pivotement (22), et un deuxième élément (26, 32) relié au cadre par une deuxième tige de pivotement (28) et relié au premier élément (20) par une troisième tige de pivotement (34), de manière à pouvoir se déplacer entre une position fermée, dans laquelle les deux éléments (20, 26, 32) sont alignés à chevauchement les uns par rapport aux autres, et une position complètement ouverte, dans laquelle les deux éléments (20, 26, 32) sont maintenus ensemble en étant disposés sensiblement bout à bout entre eux, caractérisé en ce que l'un des éléments (20) de la liaison à genouillère comprend une partie formant came (74, 76) comportant au moins trois évidements (79, 80, 82) s'étendant radialement vers l'intérieur, ménagés autour de la troisième tige de pivotement (34), et l'autre élément (32) de la liaison à genouillère porte un suiveur de came (90) sollicité élastiquement, agencé de façon à pouvoir être sélectivement engagé dans chacun desdits au moins trois évidements (79, 80, 82), afin de maintenir le panneau (12) dans une position fermée, une position complètement ouverte, et une position intermédiaire entre la position fermée et la position complètement ouverte.

2. Loquet selon la revendication 1, dans lequel l'élément (26, 32) de la liaison à genouillère portant le suiveur de came comprend une première partie de liaison (26) portant le suiveur de came (90), une deuxième partie de liaison (32) reliée de façon à effectuer un déplacement rectiligne par rapport à la première partie de liaison (26), et un moyen élastique (58) déplaçant les deux parties de liaison (26, 32) l'une par rapport à l'autre, de manière à pousser le suiveur de came (90) vers la troisième tige de pivotement (34).

3. Loquet selon la revendication 2, dans lequel ladite deuxième partie de liaison (32) porte une partie formant arrêt (52), positionnée de manière à être déplacée par ledit moyen élastique afin de venir en contact avec une partie complémentaire (62) sur la tige de pivotement (28), à laquelle est reliée ladite première partie de liaison (26), de manière à limiter tout déplacement axial de ladite tige de pivotement (28) la dégageant de ladite troisième partie de liaison (26).

4. Loquet selon la revendication 1, 2 ou 3, dans lequel le premier élément (20) comprend une prise pour doigts (70, 72).
